# EUROPEAN PATENT APPLICATION

(11) **EP 2 072 928 A1**
(43) Date of publication of application: **24.06.2009**
(21) Application number: 07807701.3
(22) Date of filing: 21.09.2007
(51) Int. Cl.: F24F 13/28, B01D 46/10, F24F 13/20

(54) **AIR CONDITIONER**

(30) Priority: 25.09.2006 JP 2006259142
(71) Applicant: Daikin Industries, Ltd., Osaka-shi, Osaka 530-8323 (JP)
(72) Inventor: MATSUBARA, Atsushi, Kusatsu-shi Shiga 525-8526 (JP)
(74) Representative: Spilgies, Jan-Hendrik
(86) International application number: PCT/JP2007/068351
(87) International publication number: WO 2008/038582

(57) **Abstract**

To ensure that, even when the attachment position of a filter is displaced, air that bypasses the filter is not sucked into a heat exchanger side. An air conditioner comprises: an air conditioning mechanism (X) where a heat exchanger (7) and a fan (8) are disposed inside a ventilation path (5) that leads from a suction opening (3) arranged across a front surface side to a top surface side of a casing (1) to a blowout opening (4); a cleaning mechanism (Y) that causes a thin plate-shaped filter (13) disposed such that the filter (13) may freely move along an inner surface of the suction opening (3) to move from a position where the filter (13) exhibits a predetermined filter function, remove dirt adhering to surface of the filter (13), and thereafter causes the filter (13) to return to the position where the filter (13) exhibits the predetermined filter function; and a baffle plate (35) that prevents air that does not pass through the filter (13) in a return operation limit of the filter (13) from being sucked into the heat exchanger (7) side after filter attachment after maintenance of the filter (13) or during return operation of the filter (13), and it is ensured by the baffle plate (35) that air that does not pass through the filter (13) is prevented from being sucked into the heat exchanger (7) side when the filter (13) has been returned after cleaning by the cleaning mechanism (Y).

## Description

### TECHNICAL FIELD

The present invention relates to an air conditioner and more specifically to an air conditioner in which both an air conditioning mechanism and a filter cleaning mechanism are installed.

### BACKGROUND ART

An air conditioner disposed with a cleaning mechanism that automatically cleans a filter has conventionally been known. The filter cleaning mechanism in an air conditioner of this configuration is, for example, configured by a thin plate-shaped filter disposed such that the filter may freely reciprocally move along an inner surface of an air suction opening, a dust box disposed in a reciprocal movement path of the filter, and a brush disposed inside the dust box so as to sandwich both front and back sides of the filter, and the function of the filter is regenerated by using the brush to brush off dirt adhering to the surface of the filter that reciprocally moves inside the dust box (see patent citation 1).

Patent Citation 1: JP-ANo. 2004-101101

### DISCLOSURE OF THE INVENTION

### <Technical Problem>

In the case of the filter cleaning mechanism in the air conditioner disclosed in the above-described patent citation 1, it is necessary to cause the filter to return to its regular position after cleaning has been completed because dirt adhering to the surface of the filter is removed by the brush in the process of causing the filter to reciprocally move. In this type of cleaning mechanism that causes the filter to reciprocally move, it is necessary to impart leeway structurally in a state where the filter is attached because of the ease of attachment of the filter and the constraints of a drive mechanism. However, in the case of a conventional cleaning mechanism, sometimes air that does not pass through the filter (in other words, air that bypasses the filter) is sucked into a heat exchanger and leads to dirtying of the heat exchanger and mold formation, or the filter attachment position becomes displaced such that the attachment detection is erroneously detected, so it has been difficult to impart structural leeway.

The present invention has been made in view of the above-described point, and it is an object thereof to ensure that, even when the attachment position of the filter becomes displaced, air that bypasses the filter is not sucked into the heat exchanger side.

### <Solution to the Problem>

An air conditioner pertaining to a first aspect of the present invention comprises: an air conditioning mechanism where a heat exchanger and a fan are disposed inside a ventilation path that leads from a suction opening arranged across a front surface side to a top surface side of a casing to a blowout opening formed in a bottom surface side of the casing; a cleaning mechanism that causes a thin plate-shaped filter disposed such that the filter may freely move along an inner surface of the suction opening to move from a position where the filter exhibits a predetermined filter function, remove dirt adhering to surface of the filter, and thereafter causes the filter to return to the position where the filter exhibits the predetermined filter function; and air inflow deterring means that prevents air that does not pass through the filter in a return operation limit of the filter from being sucked into the heat exchanger after filter attachment after maintenance of the filter or during return operation of the filter.

In this air conditioner, air that does not pass through the filter in the return operation limit of the filter is prevented by the action of the air inflow deterring means from being sucked into the heat exchanger side after filter attachment after maintenance of the filter or when the filter has been returned after filter cleaning by the cleaning mechanism. Consequently, it becomes possible to impart leeway to the filter attachment structure, and even if the return position of the filter were to become displaced, the heat exchanger is no longer dirtied and mold no longer forms.

An air conditioner pertaining to a second aspect of the present invention is the air conditioner pertaining to the first aspect of the present invention, wherein the air inflow deterring means is configured by a baffle plate that is disposed in a site where a top end portion of the filter is stored.

In this air conditioner, there is obtained air inflow deterring means of an extremely simple structure.

An air conditioner pertaining to a third aspect of the present invention is the air conditioner pertaining to the second aspect of the present invention, wherein the baffle plate is formed integrally with a filter attachment frame that configures the cleaning mechanism.

In this air conditioner, the filter attachment frame that configures the cleaning mechanism and the baffle plate can be given an integrated structure, the structure can be simplified, and costs can be reduced.

An air conditioner pertaining to a fourth aspect of the present invention is the air conditioner pertaining to any one of the first aspect to the third aspect of the present invention, wherein detecting means that detects the return operation limit of the filter is disposed in the cleaning mechanism.

In this air conditioner, the return operation limit of the filter in the cleaning mechanism can be easily verified by the detecting means.

An air conditioner pertaining to a fifth aspect of the present invention is the air conditioner pertaining to the fourth aspect of the present invention, wherein the detecting means is configured to detect a position just a predetermined dimension away from a return operation direction end portion of the filter.

In this air conditioner, it becomes possible to detect the return of the filter in a state where the end portion on the return operation limit side of the filter has reached the site where the air inflow deterring means is formed, and more reliable return detection can be performed. Further, reliable attachment detection can be performed even at the time of attachment after maintenance of the filter.

### <Advantageous Effects of the Invention>

In the air conditioner pertaining to the first aspect of the present invention, there is the effect that it becomes possible to impart leeway to the filter attachment structure, and even if the return position of the filter were to become displaced, the heat exchanger is no longer dirtied and mold no longer forms.

In the air conditioner pertaining to the second aspect of the present invention, the air inflow deterring means is configured by the baffle plate that is disposed in the site where the top end portion of the filter is stored, so there is obtained air inflow deterring means of an extremely simple structure.

In the air conditioner pertaining to the third aspect of the present invention, the baffle plate is formed integrally with the cleaning unit casing that configures the cleaning mechanism, so the filter attachment frame that configures the cleaning mechanism and the baffle plate can be given an integrated structure, the structure can be simplified, and costs can be reduced.

In the air conditioner pertaining to the fourth aspect of the present invention, the detecting means that detects the return operation limit of the filter is disposed in the cleaning mechanism, so the return operation limit of the filter in the cleaning mechanism can be easily verified by the detecting means.

In the air conditioner pertaining to the fifth aspect of the present invention, it becomes possible to detect the return of the filter in a state where the end portion on the return operation limit side of the filter has reached the site where the air inflow deterring means is formed, and more reliable return detection can be performed. Further, reliable attachment detection can be performed even at the time of attachment after maintenance of the filter.

### BRIEF DESCRIPTION OF THE DRAWINGS

FIG. 1 is a perspective diagram showing the exterior of an air conditioner pertaining to an embodiment of the present invention.
FIG. 2 is an enlarged cross-sectional diagram along II-II of FIG. 1.
FIG. 3 is a perspective diagram showing a state where a casing has been removed in the air conditioner pertaining to the embodiment of the present invention.
FIG. 4 is an enlarged perspective diagram of a filter that is used in the air conditioner pertaining to the embodiment of the present invention.
FIG. 5 is an enlarged perspective diagram showing essential portions of a cleaning mechanism in the air conditioner pertaining to the embodiment of the present invention.
FIG. 6 is an enlarged front diagram of pulleys that are used in the cleaning mechanism in the air conditioner pertaining to the embodiment of the present invention.
FIG. 7 is an enlarged cross-sectional diagram of a portion seen from arrow IV of FIG.
2.

### EXPLANATION OF THE REFERENCE SIGNS

- 1: Casing
- 3: Suction Opening
- 4: Blowout Opening
- 5: Ventilation Path
- 7: Heat Exchanger
- 8: Fan
- 13: Filters
- 13a: Top Ends
- 14: Cleaning Unit Casing
- 35: Air Inflow Deterring Means (Baffle Plate)
- 38: Detecting Means (Limit Switch)
- X: Air Conditioning Mechanism
- Y: Cleaning Mechanism

### BEST MODE FOR CARRYING OUT THE INVENTION

Below, the present invention will be described in regard to a preferred embodiment with reference to the attached drawings.

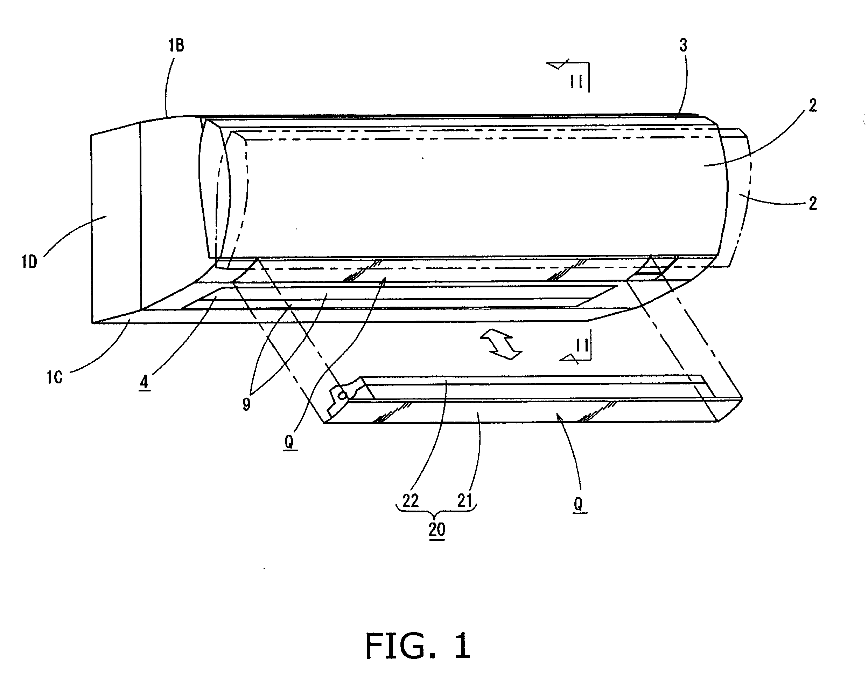

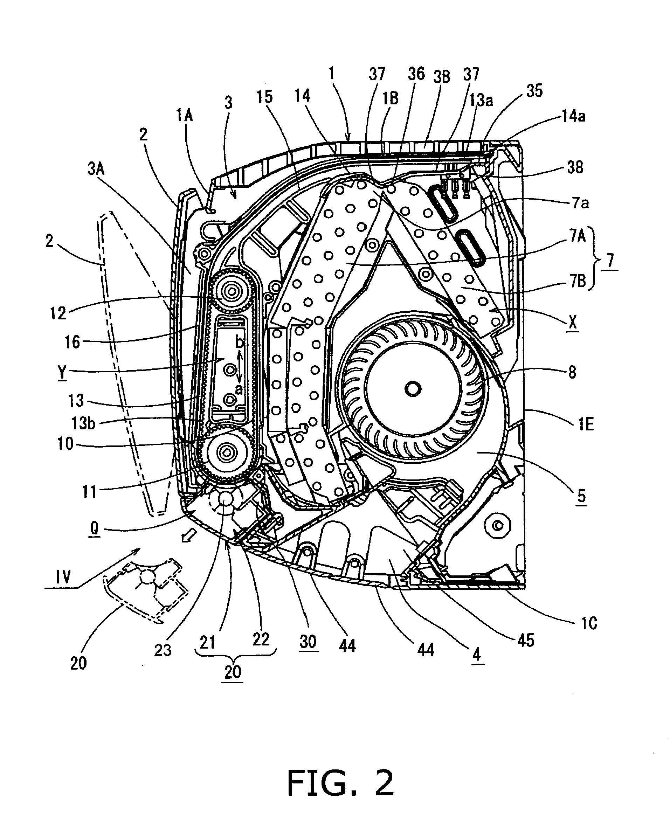

In FIG. 1 and FIG. 2, there is shown an air conditioner pertaining to the embodiment of the present invention. This air conditioner is an indoor unit of a separate type air conditioner and is disposed with a horizontally long box-shaped casing 1 that is attached to an indoor wall surface. In a front surface wall 1A and a ceiling surface wall 1B of this casing 1, there are respectively disposed a front surface side suction opening 3A and a top surface side suction opening 3B. Further, on the front surface of the front surface side suction opening 3A, there is disposed a front surface panel 2.

This front surface panel 2 is configured to be capable of opening and closing between a closed position where the front surface panel 2 is in proximity to the front surface side suction opening 3A and hides the front surface side suction opening 3A as respectively indicated by solid lines in FIG. 1 and FIG. 2 and a forwardly slanting open position where the front surface panel 2 moves downward from the closed position such that its top end side is forwardly pushed out as respectively indicated by chain lines in FIG. 1 and FIG. 2, and the front surface panel 2 is configured to open the front surface side suction opening 3A in the open position.

Further, in the front-rear direction intermediate position of a bottom surface wall 1C of the casing 1, there is disposed a horizontally long opening-shaped blowout opening 4, and in this blowout opening 4, there are disposed a horizontal flap 44 and a vertical flap 45.

Moreover, inside a storage portion 30 that is disposed on the front side of the blowout opening 4 in the casing 1 and in a position in proximity to the bottom end of the front surface wall 1A, there is detachably attached a brush mechanism Q that is disposed with a later-described dust box 20.

Additionally, as shown in FIG. 2, in a ventilation path 5 that is formed in an area inside the casing 1 leading from the suction opening 3 (that is, the front surface side suction opening 3A and the top surface side suction opening 3B) to the blowout opening 4, there are disposed a heat exchanger 7 and a fan 8, and an air conditioning mechanism X is configured by these.

It will be noted that the heat exchanger 7 has a substantially angular inverted V-bent shape comprising a first heat exchanger 7A that is apart from and faces the suction opening 3 (mainly the front surface side suction opening 3A) and extends in the vertical direction and a second heat exchanger 7B that is coupled to the top end of the first heat exchanger 7A and from there slants downward toward a rear surface wall 1E.

In a front surface side space formed between the front surface side suction opening 3A in the casing 1 and the front surface of the first heat exchanger 7A and a top surface side space formed between the top portion of the first heat exchanger 7A and the second heat exchanger 7B and the top surface side suction opening 3B, there is disposed a cleaning mechanism Y that straddles both of these spaces and will be described next.

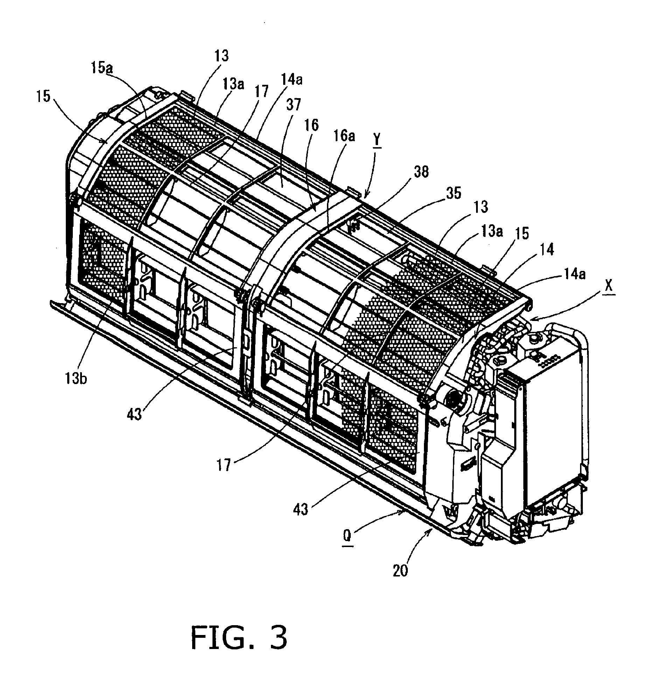

This cleaning mechanism Y is, as shown in FIG. 2 and FIG. 3, disposed with a cleaning unit casing 14 that has a shape, when seen from the side, that is curved so as to follow the inner surface of the top surface side suction opening 3B from the front surface side suction opening 3A of the casing 1. This cleaning unit casing 14 has a horizontally long frame shape, is fixedly disposed on the casing 1 side, is disposed with a pair of left and right side wall portions 15 and an intermediate wall portion 16 positioned intermediately between the side wall portions 15 in the direction in which these side wall portions 15 face each other, and comprises a frame-shaped body that has been integrated as a result of these side wall portions 15 and the intermediate wall portion 16 being coupled together by lattice members 17. In this cleaning unit casing 14, on the side edges of top surface side portions of the side wall portion 15 and the intermediate wall portion 16 corresponding to the top surface side suction opening 3B in the casing 1, guide grooves 15a and 16a are disposed respectively. Further, on a front surface portion of the cleaning unit casing 14 corresponding to the front surface side suction opening 3A of the casing 1, frame-shaped filter holders 43 are attached so as to be pivotable in the front-rear direction about their top edge sides as its pivot center and cover this front surface portion from the outside (that is, the front surface side).

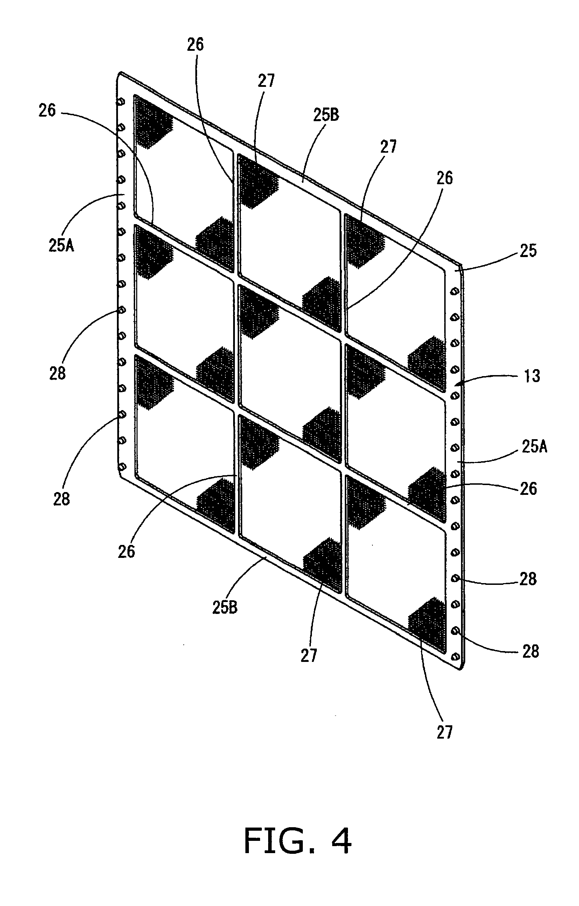

On the outer surface side of the cleaning unit casing 14, between the guide groove 15a of the one side wall portion 15 and the guide groove 16a of the intermediate wall portion and also between the guide groove 15a of the other side wall portion 15 and the guide groove 16a of the intermediate wall portion 16, thin plate-shaped filters 13 such as shown in FIG. 4 are respectively disposed so as to be movable along the direction of curvature of the cleaning unit casing 14. It will be noted that the filters 13 are configured to be prevented from rising in the front surface portion of the cleaning unit casing 14 by the filter holders 43.

Each of the filters 13 is, as shown in FIG. 4, configured by a rectangular frame body 25 (specifically, side frames 25A that are positioned on both sides in the moving direction and front and back frames 25B that are positioned on the front and back sides in the moving direction), lattice crosspieces 26 that are installed bridging the frame body 25, and filter members 27 that are disposed in the spaces enclosed by the lattice crosspieces 26, with numerous projections 28 arranged equidistantly in the moving direction being disposed integrally on, so as to project from, the side frames 25A.

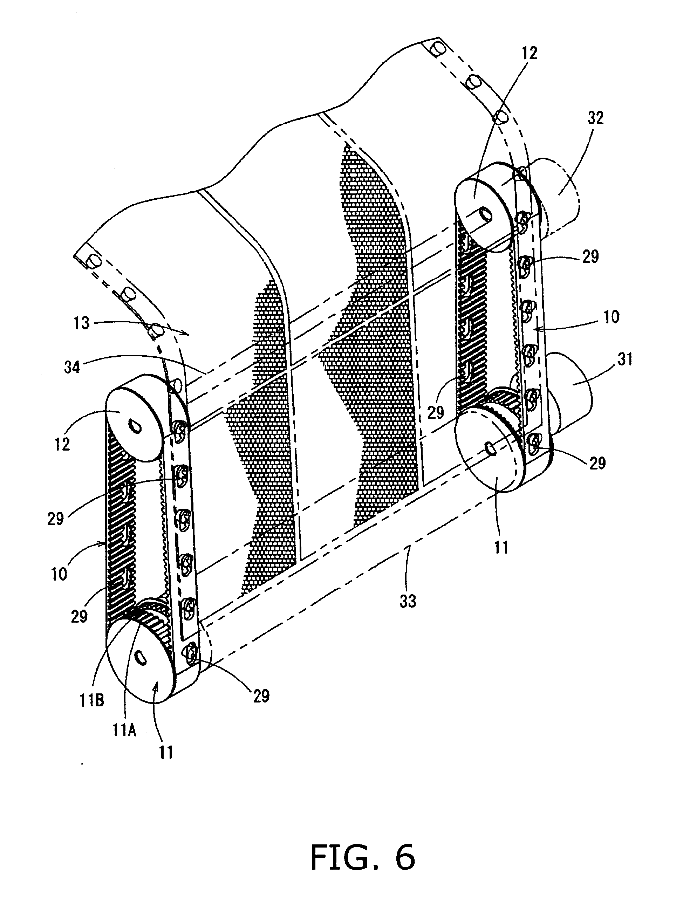

Additionally, each of the filters 13 is, as shown in FIG. 2 and FIG. 6, locked to endless belts 10 that are wound between first pulleys 11 and second pulleys 12 that are disposed in parallel apart from each other in the vertical direction in the front surface portion of the cleaning unit casing 14, the filters 13 are moved integrally with the endless belts 10 in accompaniment with the traveling of the endless belts 10, and the locking of the filters 13 to the endless belts 10 is accomplished by engagement between the projections 28 and numerous engagement holes 29 arranged equidistantly and formed in the endless belts 10. In this case, giving the shape of each of the engagement holes 29 an elliptical shape having a long axis in the moving direction is desirable because the degree of freedom when causing the projections 28 to engage with the engagement holes 29 becomes larger, and it is preferable to make the distance between the engagement holes 29 equal to the distance between the projections 28, but the distance between the projections 28 may also be an n-multiple of the distance between the engagement holes 29. Motors 31 and 32 are drive means for respectively driving the first pulleys 11 and the second pulleys 12 to rotate.

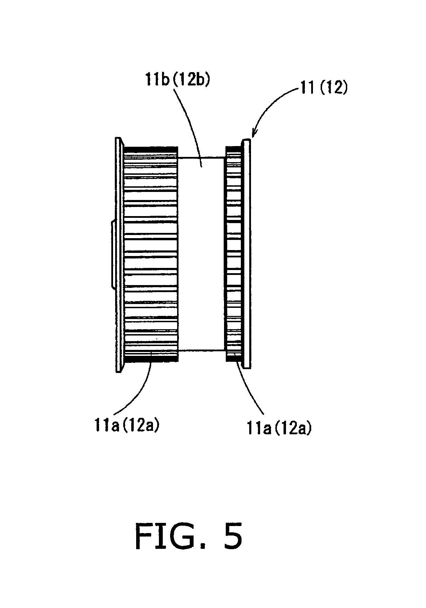

Incidentally, the endless belts 10 and the first and second pulleys 11 and 12 are configured to be synchronously driven by meshing between concavo-convexities 10a formed on the inner surface of the endless belts 10 and concavo-convexities 11 a and 12a formed on the outer peripheral surfaces of the first and second pulleys 11 and 12, and on the outer peripheral surfaces of the first and second pulleys 11 and 12, there are disposed projection escape portions 11b and 12b that are formed by excising the concavo-convexities 11 a and 12a in order to avoid interference with the projections 28 on the filters 13 sides (see FIG. 5). A drive shaft 33 synchronously drives the left and right first pulleys 11, and a drive shaft 34 synchronously drives the left and right second pulleys 12.

Incidentally, the filters 13 are based on a disposed state where, as shown in FIG. 2 and FIG. 3, top ends 13a thereof are positioned on a top end portion 14a of the cleaning unit casing 14 and bottom ends 13b thereof are positioned in the vicinities of the first pulleys 11. This disposed state is a position during normal air conditioning operation and will hereinafter be called a "first filter position".

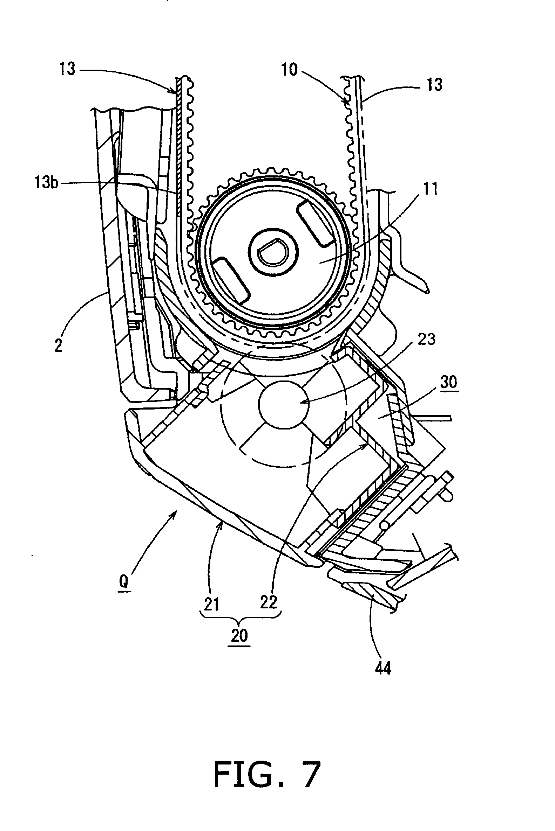

In contrast, during cleaning operation of performing cleaning of the filters 13, the first and second pulleys 11 and 12 forwardly rotate, the endless belts 10 travel in the direction of arrow a (see FIG. 2 and FIG. 5), and the filters 13 go around the outsides of the first pulleys 11 and are pulled out toward the second pulleys 12 from the "first filter position" together with the endless belts 10 as indicated by a chain line in FIG. 7. The position of the filters 13 at this time will hereinafter be called a "second filter position". Further, after cleaning ends, the first and second pulleys 11 and 12 reversely rotate and the endless belts 10 travel in the direction of arrow b (see FIG. 2 and FIG. 5), whereby the filters 13 are returned to the "first filter position" from the "second filter position" together with the endless belts 10.

In this manner, when the filters 13 reciprocally move between the "first filter position" and the "second filter position", dirt trapped in the surfaces of the filters 13 is brushed off by the next-described brush mechanism Q, and the dirt trapping function of the filters 13 is regenerated.

The brush mechanism Q is, as shown in FIG. 7, detachably attached with respect to the storage portion 30 disposed in the front end potion of the bottom surface wall 1C of the casing 1 and is configured to be equipped with a cleaning brush 23 inside a dust box 20 that comprises a first box body 21 and a second box body 22. The cleaning brush 23 is driven to rotate by an unillustrated brush drive motor.

As described above, the filters 13 are reciprocally moved between the "first filter position" and the "second filter position" and air conditioning operation is implemented in a state where the filters 13 are positioned in the "first filter position", and at this time, it is necessary for the filters 13 to be accurately positioned in the "first filter position". In other words, it is necessary for the top ends 13a of the filters 13 to reliably reach storage positions formed in the top end portion 14a of the cleaning unit casing 14, for air that has bypassed the filters 13 to not flow into the heat exchanger 7 side, and for just air that has passed through the filters 13 to flow into the heat exchanger 7. However, in actuality, sometimes the top ends 13a of the filters 13 do not exactly reach, and end up stopping just short of, the top end portion 14a of the cleaning unit casing 14 due to drive error or displacement when the filters 13 are reciprocally moved. Further, sometimes, even in an attached state after a user has performed maintenance of the filters 13, the top ends 13a of the filters 13 do not exactly reach the top end portion 14a of the cleaning unit casing 14. When this happens, there is the potential for spaces through which sucked-in air can pass to form between the top ends 13a of the filters 13 and the top end portion 14a of the cleaning unit casing 14, air that has bypassed the filters 13 to end up flowing into the heat exchanger 7 side, and lead to dirtying of the heat exchanger 7 and mold formation.

Thus, in the present embodiment, on the bottom portion (that is, on the heat exchanger 7 side) of the top end portion 14a of the cleaning unit casing 14, there is integrally formed a baffle plate 35 that acts as air inflow deterring means that prevents air that does not pass through the filters 13 in a return operation limit of the filters 13 from being sucked into the heat exchanger 7 side during attachment after maintenance of the filters 13 or during return operation of the filters 13. The baffle plate 35 is configured by a base end portion of a seal member 36 that is integrally disposed so as to project diagonally downward from the top end portion 14a of the cleaning unit casing 14 and is for sealing a bent connecting portion 7a of the heat exchanger 7. The seal member 36 has downward energizing force such that it can be pressure-contacted to the bent connecting portion 7a. Air ventilation holes 37 are holes formed in the seal member 36.

Further, in the cleaning unit casing 14, there is disposed a limit switch 38 that acts as detecting means that detects the return operation limit of the filters 13. The limit switch 38 is configured to detect a position a predetermined dimension away from return operation direction end portions (that is, the top ends 13a) of the filters 13. By so doing, the limit switch 38 becomes able to detect the return of the filters 13 in a state where the end portions (that is, the top ends 13a) on the return operation limit side of the filters 13 have reached the site where the baffle plate 35 is formed, and can perform more reliable return detection. Further, the limit switch 38 can reliably perform attachment detection even during attachment of the filters 13 after maintenance.

It will be noted that, in the preceding embodiment, there are employed drive means comprising the pulleys 11 and 12 and the endless belts 10 in order to reciprocally move the filters 13, but the drive means are not limited to this, and rack and pinion drive means can also be employed.

The present invention is not limited to the preceding embodiment and is of course appropriately design-alterable in a range that does not depart from the gist of the invention.

## Claims

1. An air conditioner comprising:
an air conditioning mechanism (X) where a heat exchanger (7) and a fan (8) are disposed inside a ventilation path (5) that leads from a suction opening (3) arranged across a front surface side to a top surface side of a casing (1) to a blowout opening (4) formed in a bottom surface side of the casing (1);
a cleaning mechanism (Y) that causes a thin plate-shaped filter (13) disposed such that the filter (13) may freely move along an inner surface of the suction opening (3) to move from a position where the filter (13) exhibits a predetermined filter function, remove dirt adhering to surface of the filter (13), and thereafter causes the filter (13) to return to the position where the filter (13) exhibits the predetermined filter function; and
air inflow deterring means (35) that prevents air that does not pass through the filter (13) in a return operation limit of the filter (13) from being sucked into the heat exchanger (7) side after filter attachment after maintenance of the filter (13) or during return operation of the filter (13).

2. The air conditioner according to claim 1, wherein the air inflow deterring means (35) is configured by a baffle plate that is disposed in a site where a top end (13a) portion of the filter (13) is stored.

3. The air conditioner according to claim 2, wherein the baffle plate is formed integrally with a cleaning unit casing (14) that configures the cleaning mechanism (Y).

4. The air conditioner according to any one of claim 1 to claim 3, wherein detecting means (38) that detects the return operation limit of the filter (13) is disposed in the cleaning mechanism (Y).

5. The air conditioner according to claim 4, wherein the detecting means (38) is configured to detect a position just a predetermined dimension away from a return operation direction end portion of the filter (13).
